# EUROPÄISCHE PATENTANMELDUNG

(11) **EP 2 537 659 A1**
(43) Veröffentlichungstag der Anmeldung: **26.12.2012**
(21) Anmeldenummer: 12004605.7
(22) Anmeldetag: 19.06.2012
(51) Int. Cl.: B29C 44/34, B29C 44/58

(54) **Verfahren zum Spritzgiessen von Kunststoff-Formteilen aus thermoplastischem Kunststoff**

(30) Priorität: 24.06.2011 DE 102011105775
(71) Anmelder: Wittmann Battenfeld GmbH, 2542 Kottingbrunn (AT)
(72) Erfinder: Eckardt, Helmut, 58540 Meinerzhagen (DE)
(74) Vertreter: Gosdin, Michael

(57) **Zusammenfassung**

Die Erfindung betrifft ein Verfahren zum Spritzgießen von Kunststoff-Formteilen aus thermoplastischem Kunststoff. Um stabile Formteile bei geringer Dichte zu erzeugen, sieht das Verfahren die Schritte vor: a) Herstellen von Kunststoffschmelze; b) Versetzen der Kunststoffschmelze mit einem Fluid; c) Durchmischen der mit Fluid versetzten thermoplastischen Kunststoffschmelze; d) Bereitstellen eines Spritzgießwerkzeugs (11) mit einer Kavität (12) mit variablem Volumen; e) Erwärmen zumindest eines Teils der Wandungen (9) der Kavität (12) auf eine Warmtemperatur; f) Einspritzen des Gemisches aus thermoplastischer Kunststoffschmelze und Gas in die Kavität (12); g) Vergrößern des Volumens der Kavität (12); h) Abkühlen zumindest eines Teils der Wandungen (9) der Kavität auf eine Kalttemperatur; i) Entformen des spritzgegossenen Kunststoff-Formteils, nachdem die Kunststoffschmelze zumindest teilweise verfestigt ist, wobei die Warmtemperatur (T_{w}) im Bereich oder oberhalb der Erweichungstemperatur oder der Glastemperatur des verarbeiteten Kunststoffmaterials oder mindestens um eine vorgegebene Temperaturdifferenz oberhalb der für die Verarbeitung des verarbeiteten Kunststoffmaterials empfohlenen Werkzeugtemperatur liegt.

## Beschreibung

Die Erfindung betrifft ein Verfahren zum Spritzgießen von Kunststoff-Formteilen aus thermoplastischem Kunststoff.

Ein solches Verfahren ist beispielsweise aus der DE 198 48 151 A1 bekannt. Hier wird für die Herstellung von Kunststoff-Formteilen aus thermoplastischer Schmelze das Strukturschaumspritzen mit physikalischer Begasung der Schmelze eingesetzt. Bei diesem Verfahren wird mit Treibmittel versehene Schmelze in die Kavität eines Spritzgießwerkzeugs eingespritzt. Der Gasdruck drückt die Schmelze während der Abkühlung gegen die Kavitätswände, so dass abkühlungsbedingte Volumenkontraktionen ausgeglichen werden können und die Formteiloberfläche frei von Einfallstellen ist.

Ähnliche Verfahren sind aus der DE 100 14 156 A1, der DE 10 2008 031 391 A1, der DE 10 2007 021 750 A1 und aus der WO 92/18561 A1 bekannt.

Hiermit können vorteilhaft geschäumte Formteile mit einer kompakten Haut und einem geschäumten Kern hergestellt werden. Insbesondere beim vorliegenden Einsatz eines physikalischen Treibmittels (Fluid, insbesondere Gas) ist es vorteilhaft, dass ein höherer Gasdruck als beim Einsatz eines chemischen Treibmittels aufgebaut werden kann, um höher viskose Kunststoffe gut verarbeiten und Formteile mit geringen Wanddicken herstellen zu können. So erfolgt eine gleichmäßige Verteilung des Gases in der Schmelze.

Sollen hochfeste und biegesteife Formteile mit geringem Gewicht hergestellt werden, wie sie verstärkt insbesondere im Bereich der Automobilindustrie nachgefragt werden, ist das vorbekannte Verfahren noch nicht optimal. Beim Strukturschaum sind nämlich mit den vorbekannten Verfahren Dichtereduzierungen nur in begrenztem Maße möglich. Bei Wanddicken von ca. 2,5 mm werden Dichtereduzierungen im Bereich von ca. 5 % bis 10 % erreicht. Größere Dichtereduzierungen bewirken eine wesentliche Verschlechterung der mechanischen Eigenschaften. Bei Wanddicken von 5 mm sind Dichtereduzierungen von ca. 10 % bis 20 % noch sinnvoll möglich.

Eine Dichtereduzierung bei geschäumten Formteilen bewirkt immer auch eine Verschlechterung der mechanischen Eigenschaften, d. h. insbesondere der Festigkeiten. Außerdem kann sich die Oberfläche der Formteile wesentlich verschlechtern; es entstehen dann häufig sog. Silberschlieren auf der Oberfläche.

Es ist zwar möglich, die genannte Schlierenbildung zu reduzieren oder ganz zu verhindern, indem nämlich beispielsweise ein Gasgegendruck im Werkzeug aufgebracht wird, der größer ist als der Gasdruck. In diesem Fall fällt allerdings nachteilig die mögliche Dichtreduzierung noch geringer aus.

Es ist bekannt, das Volumen der geschäumten Formteile durch Vergrößern der Wanddicke nach dem Einspritzen zu vergrößern. Diese als "atmendes Werkzeug" bekannte Technik ist in vielen Varianten bekannt. Allerdings bleibt das beschriebene Problem bestehen, d. h. die erreichbare Dichtereduzierung bleibt sehr beschränkt.

Nachteilig ist also bei allen vorbekannten Verfahren der gattungsgemäßen Art, dass das mögliche Verhältnis von Endwanddicke zur Anfangswanddicke gering ist, wenn gleichzeitig ein festes und leichtes Formteil angestrebt wird, das eine hohe Oberflächenqualität haben soll. Abhängig von der Ausgangswanddicke, dem verwendeten Polymer und dem Treibmittel sind Wanddickenverhältnisse von mehr als zwei nur selten zu erreichen.

Der Erfindung liegt daher die **Aufgabe** zugrunde, ein Verfahren der gattungsgemäßen Art so fortzubilden, dass es in einfacher und prozesssicherer Weise möglich ist, leichte und hochfeste Kunststoff-Formteile herzustellen, die eine hohe Oberflächenqualität, insbesondere Schlierenfreiheit, aufweisen. Es sollen also geschäumte, leichte Formteile mit einer kompakten geschlossenen Oberfläche herstellbar sein, die sich durch eine sehr niedrige Dichte, insbesondere von weniger als 0,5 g/cm³, auszeichnen.

Die **Lösung** dieser Aufgabe durch die Erfindung ist dadurch gekennzeichnet, dass das Verfahren die folgenden Schritte umfasst:
a) Herstellen von thermoplastischer Kunststoffschmelze durch Rotation einer Plastifizierschnecke in einem Schneckenzylinder;
b) Versetzen der sich in der Plastifizierschnecke befindlichen thermoplastischen Kunststoffschmelze mit einem Fluid durch Eingabe des Fluids und/oder einer das Fluid enthaltenden chemischen Komponente in den Schneckenzylinder;
c) Durchmischen der mit Fluid versetzten thermoplastischen Kunststoffschmelze durch Ausführung einer Rotationsbewegung der Plastifizierschnecke;
d) Bereitstellen eines Spritzgießwerkzeugs mit einer Kavität, wobei die Kavität Wandungen aufweist, wobei das Volumen der Kavität des Spritzgießwerkzeugs durch relatives Verschieben von Werkzeugteilen von einem Anfangsvolumen auf ein Endvolumen vergrößerbar ist;
e) Erwärmen zumindest eines Teils der Wandungen der Kavität auf eine Warmtemperatur;
f) Einspritzen des Gemisches aus thermoplastischer Kunststoffschmelze und Gas in die Kavität des Spritzgießwerkzeugs, wobei das Volumen der Kavität das Anfangsvolumen einnimmt;
g) Vergrößern des Volumens der Kavität durch relatives Verschieben von Werkzeugteilen;
h) Abkühlen zumindest eines Teils der Wandungen der Kavität auf eine Kalttemperatur;
i) Entformen des spritzgegossenen Kunststoff-Formteils, nachdem die Kunststoffschmelze zumindest teilweise verfestigt ist,
wobei die Warmtemperatur im Bereich oder oberhalb der Erweichungstemperatur oder der Glastemperatur des verarbeiteten Kunststoffmaterials oder mindestens um eine vorgegebene Temperaturdifferenz oberhalb der für die Verarbeitung des verarbeiteten Kunststoffmaterials empfohlenen Werkzeugtemperatur liegt.

Das Herstellen von thermoplastischer Kunststoffschmelze gemäß obigem Schritt a) erfolgt bevorzugt in einer kombinierten Plastifizier- und Einspritzeinheit. Allerdings ist auch das Verfahren nicht ausgeschlossen, wonach eine Vorplastifiziereinheit Schmelze in einen Schmelzespeicher fördert, von wo aus die Schmelze in das Werkzeug gelangt.

Das Versetzen der Kunststoffschmelze gemäß obigem Schritt b) mit Fluid erfolgt bevorzugt durch Mittel zum Einspritzen des Fluids an einer axialen Einspritzposition des Schneckenzylinders, an der sich zumindest zeitweise Schneckengänge der Plastifizierschnecke befinden. Insoweit handelt es sich also um eine physikalische Begasung. Aber auch die chemische Begasung der Kunststoffschmelze mit Treibmitteln, die z. B. bei einer bestimmten Temperatur chemisch reagieren und Gas abspalten, ist nicht ausgeschlossen.

Die genannte vorgesehene Warmtemperatur liegt also - wie erwähnt - erfindungsgemäß im Bereich oder oberhalb der Erweichungstemperatur oder der Glastemperatur des verarbeiteten Kunststoffmaterials. Die Warmtemperatur liegt erfindungsgemäß alternativ ― was besonders bei der Verarbeitung von teilkristallinen Kunststoffen relevant werden kann - mindestens um eine vorgegebene Temperaturdifferenz oberhalb der für die Verarbeitung des verarbeiteten Kunststoffmaterials empfohlenen Werkzeugtemperatur. Hierbei ist bevorzugt an eine Temperaturdifferenz gedacht, die zwischen 40 K und 60 K liegt, im Mittel vorzugsweise bei 50 K.

Das Endvolumen der Kavität beträgt bevorzugt mindestens 150 %, vorzugsweise mindestens 300 %, des Anfangsvolumens der Kavität. Demgemäß werden wesentlich größere Aufschäumgrade gefahren, als dies mit den vorbekannten Verfahren möglich ist.

Das fertige Kunststoff-Formteil hat bevorzugt eine Dichte, die geringer ist als 0,7 g/cm³, vorzugsweise geringer ist als 0,5 g/cm³.

Das fertige Kunststoff-Formteil weist weiterhin in seinem Inneren vorzugsweise Gasblasen mit einem Durchmesser auf, wobei der Durchmesser der Gasblasen in einem Randbereich des Kunststoff-Formteils (der sich von der Außenoberfläche des Kunststoff-Formteils bis zu 10 % einer Dicken- oder Breitenabmessung ins Innere des Kunststoff-Formteils erstreckt) höchstens 50 % des Durchmesser der Gasblasen in einem Mittenbereich des Kunststoff-Formteils beträgt. Die Schaumstruktur über dem Querschnitt des Formteils hat eine integrale Verteilung. Von der Randschicht mit praktisch der Dichte des kompakten Kunststoffes nimmt die Dichte bis zur Formteilmitte ab.

Während der Durchführung des obigen Schritts g) kann auch ein Fluid, insbesondere ein Gas, in die Kunststoffschmelze injiziert werden. Hiernach wird also zur Unterstützung der Wanddickenvergrößerung während derselben zusätzlich Gas in die Schmelze injiziert. Dies kann an einer oder mehreren Stellen in der Kavität erfolgen. Bei Erreichen der Endwanddicke wird der Gasdruck dann bevorzugt wieder abgebaut, so dass sich der vorher durch die Gaseinspritzung gebildete Hohlraum wieder mit geschäumtem Kunststoff füllt und aufschäumt. Der Gasdruck kann jedoch auch während der Kühlphase aufrecht gehalten werden, wenn bestimmte Hohlräume im Kunststoffteil gewünscht sind.

Nach der Durchführung des obigen Schritts g) und Erreichen eines maximalen Volumens der Kavität kann das Volumen der Kavität wieder reduziert werden, wobei das maximale Volumen der Kavität vorzugsweise größer ist als das Endvolumen der Kavität. Hiernach ist es also vorteilhaft, nach dem Öffnen des Werkzeuges (Volumenvergrößerung) dieses einen kleinen Weg wieder zu schließen, um den Wandkontakt für eine intensivere Kühlung zu verbessern.

Vor der Durchführung des obigen Schritts f) können auch mindestens ein Einlegeteil, insbesondere eine Folie bzw. eine verstärkende Folie, ein Gewirk, ein Gewebe, ein Organoblech und/oder ein Metallblech, in die Kavität des Spritzgießwerkzeugs eingebracht werden. Demgemäß können dekorative Eigenschaften des Formteils bzw. bestimmte mechanische oder Festigkeitseigenschaften erreicht werden, wenn besagte Einlegeteile in die Kavität eingebracht werden.

Vorgesehen ist also, dass die Formnesttemperatur zyklisch erwärmt und abgekühlt wird. Voraussetzung dazu ist, dass das Formnest in kurzer Zeit energetisch günstig und schnell aufgeheizt und abgekühlt werden kann. Dazu können verschiedene Methoden eingesetzt werden, die als solche bekannt sind.

Bei einem bekannten Verfahren werden die Werkzeugkerne in Scheiben geschnitten, in die die gewünschte Kühlkontur für Kühlkanäle eingebracht wird. Danach werden die Scheiben wieder im Vakuum zum Kern verlötet. Bei einem anderen Verfahren werden die Kerne durch Laser aus Metallpulver aufgebaut. Die Kühlbohrungen werden somit kavitätsnah eingebracht.

Bei anderen Methoden werden die Werkzeuge als Schalen aufgebaut, die hinterher wieder verbunden werden und viel Platz für die Kühlung dazwischen lassen.

Bei einem weiteren Verfahren wird dicht unter der Kavitätswandung ein Volumen frei gefräst, das mit Stahlkugeln zur Übertragung der mechanischen Kräfte gefüllt wird.

Als Kühlmedium eignet sich in besonderer Weise Wasser.

Zum Aufheizen der Kavitäten können verschiedene Methoden eingesetzt werden. Möglich ist der Einsatz von Heißdampf oder ― vorzugsweise - von heißem, unter Druck gehaltenem Wasser sowie der Einsatz einer Keramikheizung, einer Last-Heizung oder einer Induktions-Heizung.

Die Formnestoberflächen können auch im geöffneten Zustand des Spritzgießwerkzeugs durch Wärmeeinwirkung von außen, wie z. B. Strahlung oder Induktion, aufgeheizt werden. Unmittelbar danach fährt das Werkzeug für den Einspritzvorgang der Kunststoffschmelze zu.

Mit diesen Methoden sind die Aufheizung und die Abkühlung der Kavitätswandung in nur wenigen Sekunden durchführbar.

Exemplarisch wird auf die DE 10 2008 031 391 A1 hingewiesen, die ein Verfahren beschreibt, bei dem durch induktive Erwärmung das Formnest in kurzer Zeit erwärmt wird.

Wie oben erläutert, wird die chemisch und/oder physikalisch begaste Kunststoffschmelze in das heiße Werkzeug eingespritzt. Durch das Einspritzen in die heiße Kavität werden geschäumte Formteile ohne Schlieren mit guter Oberfläche hergestellt.

Da bei den angestrebten großen Expansionsverhältnissen sichergestellt werden muss, dass die äußeren Fomteil-Wandungen in Kontakt mit den Kavitätswandungen bleiben, sind Treibmittel zu verwenden, die ausreichend hohe Gasdrücke aufbauen. Physikalische Treibmittel sind hier bevorzugt einzusetzen.

Die Kunststoffschmelze wird bei der Injektion in die Kavität möglichst druckarm eingespritzt, wobei eine vollständige bzw. weitgehend vollständige Füllung mit treibmittelhaltiger Schmelze erfolgt. Aufgrund der hohen Werkzeugtemperatur bildet die Schmelze eine glatte Oberfläche im Formnest, vorzugsweise ohne Schlieren.

Da durch die hohe Werkzeugtemperatur die schockartige Abkühlung an der Werkzeugwand unterbleibt, bleibt die Schmelze im Innern noch schmelzflüssig. Die hohe Werkzeug-Wandtemperatur bewirkt eine genaue Abzeichnung der Formnestoberfläche. Die Oberfläche wird somit mechanisch glatt und besonders widerstandsfähig.

Nun erfolgt ein langsames und kontrolliertes Vergrößern der Kavitätswandung, d. h. des Kavitätsvolumens. Durch den hohen Gasdruck im Innern der Schmelze und die gesteuerte oder geregelte Vergrößerung der Werkzeugwandung können die Formnestflächen bis auf das gewünschte Maß auseinander gezogen werden, ohne dass die Formteil-Wandungen sich von der Formnest-Wandung ablösen und ohne dass Lunkerbildung im Innern des Formteils auftritt.

Ist die gewünschte Wanddicke erreicht, wird mit der Kühlung des Formnestes begonnen.

Die Kühlung kann direkt vor, mit oder unmittelbar nach der Schmelzeinspritzung oder zu einem noch späteren Zeitpunkt beginnen. Wann mit der Kühlung des Formnestes begonnen wird, hat einen wesentlichen Einfluss auf die Dicke der Randschicht, die integrale Schaumverteilung, die Größe der Blasen im Kern und das mögliche Expansionsverhältnis.

Das Ergebnis sind leichte, geschäumte Formteile mit einer glatten Oberfläche und extrem niedrigen Dichten. Es lassen sich auch dickwandige leichte Teile bei sehr niedriger Dichte herstellen.

Da durch die Öffnungsbewegung des Werkzeuges der Druck des Treibmittels im Innern im Wesentlichen abgebaut ist, können die Formteile schon nach kurzer Kühlzeit entnommen werden, ohne dass ein Nachblähen der Formteile zu befürchten ist.

Mit den Verfahrensparametern wie Art, Anteil und Menge des Treibmittels, Schmelzetemperatur, Einspritzzeit u. a. sowie der Fomnesttemperatur und deren Temperaturverlauf - insbesondere in Verbindung mit der Werkzeugöffnungsgeschwindigkeit - können die Oberflächenqualitäten und Dichten der produzierten Werkstücke beeinflusst und optimiert werden. Aufschäumgrade von mehr als 4 (d. h. das Endvolumen der Kavität ist vier Mal so groß wie das Anfangsvolumen) und mehr sind in der Praxis erreichbar. So können z. B. Wanddicken von 2 mm bis auf 8 mm aufgeschäumt werden oder Wanddicken von 5 mm bis auf 20 mm.

Auch besonders biegesteife und hochfeste Formteile mit noch größeren Wanddicken oder Wanddickenbereichen können hergestellt werden.

Zur Begünstigung einer gleichmäßigen Schaumstruktur im Inneren des Formteils können keimbildende Zusätze wie Füllstoffe, chemische Treibmittel oder andere zugesetzt werden.

Auch Zusätze wie Glasfasern oder andere verstärkende Stoffe können der treibmittelhaltigen Schmelze zugegeben werden.

Die "Atmungsbewegung" des Werkzeuges muss nicht über die gesamte Fläche der Kavitätswandung gehen. Es kann sinnvoll sein, nur Abschnitte der Kavitätswand "atmen" zu lassen. Somit kann gegebenenfalls nur in bestimmten Bereichen das Formteil in seinen Eigenschaften verändert werden.

In der Zeichnung sind Ausführungsbeispiele der Erfindung dargestellt. Es zeigen:
- Fig. 1: schematisch eine Vorrichtung zum Spritzgießen,
- Fig. 2a: schematisch ein Spritzgießwerkzeug nach einer ersten Ausführungsform der Erfindung, wobei die Kavität des Spritzgießwerkzeugs ihr Anfangsvolumen einnimmt,
- Fig. 2b: zugehörig zu Fig. 2a das Spritzgießwerkzeug, wobei die Kavität jetzt ihr Endvolumen einnimmt,
- Fig. 3a: schematisch die Kunststoffschmelze ohne Darstellung des Spritzgießwerkzeugs gemäß Fig. 2a,
- Fig. 3b: schematisch das gefertigte Kunststoff-Formteil ohne Darstellung des Spritzgießwerkzeugs gemäß Fig. 2b,
- Fig. 4a: schematisch ein Spritzgießwerkzeug nach einer zweiten Ausführungsform der Erfindung, wobei die Kavität des Spritzgießwerkzeugs ihr Anfangsvolumen einnimmt,
- Fig. 4b: zugehörig zu Fig. 4a das Spritzgießwerkzeug, wobei die Kavität jetzt ihr Endvolumen einnimmt,
- Fig. 5a: schematisch ein Spritzgießwerkzeug nach einer dritten Ausführungsform der Erfindung, wobei die Kavität des Spritzgießwerkzeugs ihr Anfangsvolumen einnimmt, und
- Fig. 5b: zugehörig zu Fig. 5a das Spritzgießwerkzeug, wobei die Kavität jetzt ihr Endvolumen einnimmt.

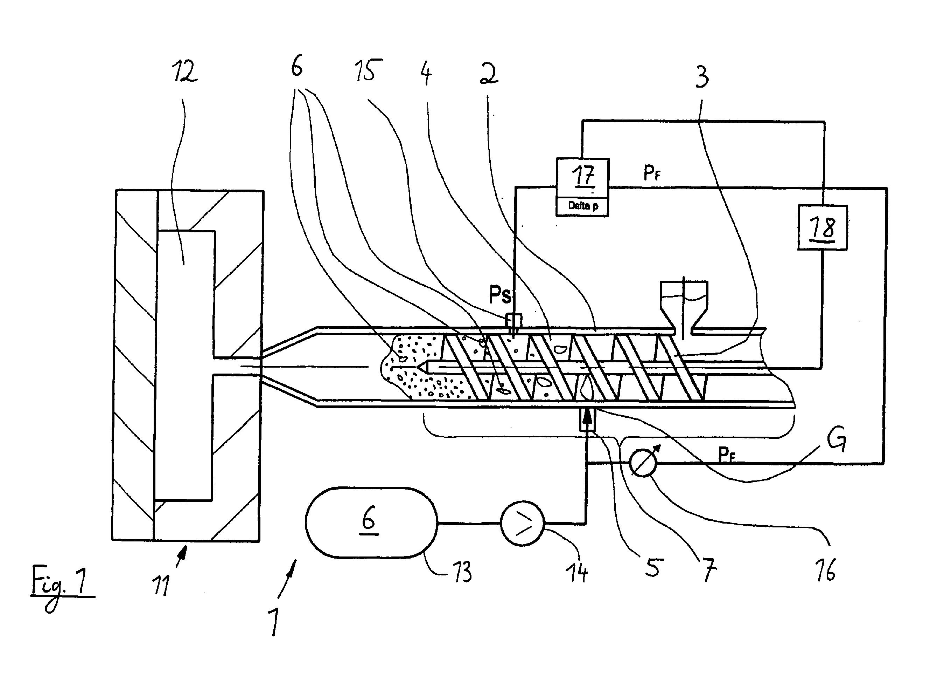

In Fig. 1 ist schematisch eine Vorrichtung zum Spritzgießen 1, also eine Spritzgießmaschine, in einem Verfahrensstadium dargestellt, in dem eine Schmelze-Gas-Mischung hergestellt wird. Später wird die hergestellte Kunststoffschmelze in das (hier nur schematisch dargestellte) Spritzgießwerkzeug 11 eingespritzt, das eine entsprechende Kavität 12 aufweist. Im Schneckenzylinder 2 ist eine Plastifizier- und Einspritzschnecke 3 drehbeweglich und axial verschiebbar angeordnet. Zwecks Herstellung von thermoplastischer Kunststoffschmelze 4 rotiert die Schnecke 3 zunächst ohne Axialbewegung im Schneckenzylinder 2.

Fluid in Form eines Gases 6 ist in einem Vorratsbehälter 13 gespeichert. Es wird einem Verdichter 14 zugeführt, der es auf einen gewünschten Druck bringt. Vom Verdichter 14 aus gelangt das Gas über eine Leitung zu einem Mittel 5 zum Einspritzen des Gases, nämlich zu einer Einspritzdüse, die am Schneckenzylinder 2 angebracht ist. Nicht dargestellt ist eine Volumenkontrollvorrichtung, mit der das Volumen des eingespritzten Gases gemäß einem vorgegebenen Wert geregelt werden kann. Durch die Düse 5 kann das Gas 6 gesteuert bzw. geregelt in den Schneckenzylinder 2 und damit in die Kunststoffschmelze 4 eingespritzt werden. Dies gelingt allerdings nur dann, wenn der Gasdruck p_{F} grösser ist als der Druck in der Schmelze p_{S}, d. h. die Druckdifferenz zwischen dem Druck im Gas und in der Kunststoffschmelze Delta p = p_{F} ― p_{S} muss positiv sein.

Die Eingasung des Gases 6 über die Düse 5 erfolgt an einer axialen Einspritzposition G, an der sich zumindest zeitweise - namentlich während der Plastifizierung von Schmelze - die Schneckengänge 7 der Schnecke 3 befinden.

Wenn genügend Schmelze-Gas-Gemisch für einen Schuss produziert ist, kann das Gemisch in die Kavität 12 des Spritzgießwerkzeugs 11 durch axiale Verschiebung der Schnecke eingespritzt werden, was nicht dargestellt ist.

Zur Schaffung eines stabilen Spritzgießprozesses wird dafür Sorge getragen, dass die Druckdifferenz Delta p weitgehend konstant bleibt, zumindest in einem vorgegebenen Toleranzbereich, der z. B. 2 bar betragen kann. Die Vorrichtung ist dafür mit einem Drucksensor 15 zur Messung des Drucks p_{S} in der Schmelze 4, mit einem Drucksensor 16 zur Messung des Gasdrucks p_{F} sowie mit einem Differenzbilder 17 zur Bestimmung der Druckdifferenz Delta p = p_{F} ― p_{S} ausgestattet. Die gemessene Druckdifferenz wird der Steuerung 18 der Spritzgießmaschine zugeleitet, die gemäß einem Programm dafür Sorge tragen kann, dass dieser Wert innerhalb eines vorgegebenen Toleranzbandes bleibt.

Als Eingriffsmöglichkeiten dienen diejenigen Spritzgießparameter, die dem Fachmann dafür geläufig sind, z. B. die Drehzahl der Schnecke und die axiale Kraft beim Einspritzen von Schmelze. Es ist evident, dass eine Reduzierung der Einspritzkraft den Schmelzedruck reduziert, worüber eine Eingriffsmöglichkeit besteht. Andererseits können auch der Gasdruck p_{F} und/oder das Gasvolumen entsprechend geregelt werden, um die gewünschte Druckdifferenz Delta p einzuhalten.

Statt eines Gases kann grundsätzlich ebenso natürlich auch ein anderes Fluid, also eine Flüssigkeit, der Schmelze zugegeben werden.

Durch die Gaszugabe wird erreicht, dass ein Formteil aus einem Kunststoff-Gas-Gemisch hergestellt wird, das keine Einfallstellen und im Inneren eine Schaumstruktur aufweist. Damit können insbesondere auch große, geschäumte Kunststoff-Formteile wie Platten und Formteile mit dreidimensionaler Geometrie auch mit unterschiedlichen Wanddicken und Verrippungen prozesssicher und preiswert hergestellt werden.

Um ein vorzeitiges Aufschäumen der Kunststoff-Gas- oder Kunststoff-Flüssigkeits-Mischung in der Kavität zu verhindern, kann vor der Injektion der Mischung in der Kavität ein Gegendruck aufgebaut werden, der erst allmählich mit dem Eintritt der Mischung abgebaut wird; der Schmelzefließfront wird somit ein Gaspolster entgegengesetzt. Das Aufschäumen kann darüber gesteuert bzw. geregelt werden.

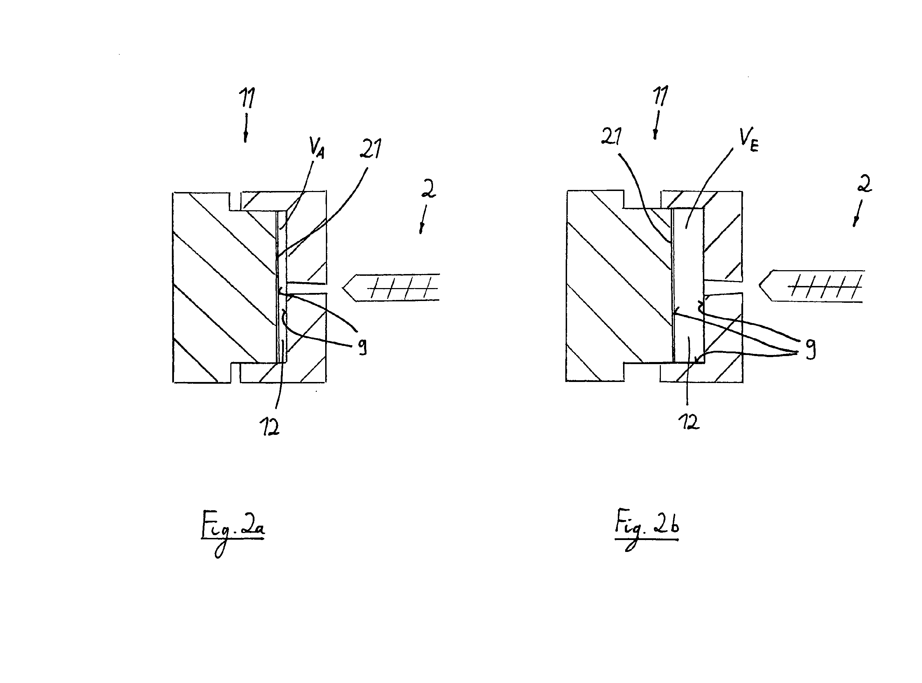

In Fig. 2 ist ein Spritzgießwerkzeug 11 gemäß einer ersten konkreten Ausgestaltung nach der Erfindung skizziert. Zwei relativ zueinander bewegliche Werkzeugteile stellen nicht nur das Öffnen und Schließen des Werkzeugs her, sondern es gilt, dass in Abhängigkeit der relativen Position der beiden Werkzeugteile auch das Volumen der Kavität 12 veränderlich ist. In Fig. 2a liegt ein geringes Anfangsvolumen V_{A} vor, das sich durch "Atmen" des einen Werkzeugteils gemäß Fig. 2b auf das größere Endvolumen V_{E} vergrößert hat. Demgemäß werden zwei sich gegenüberliegende Wandungen 9 der Kavität auseinander gefahren, nachdem sich die Kunststoffschmelze in der Kavität 12 befindet.

Nicht dargestellt ist in Fig. 2, dass das Werkzeug 11 mit Mitteln versehen ist, mit denen die Kavitätwandungen 9 schnell erwärmt und auch wieder abgekühlt werden können, um das oben beschriebenen Verfahren durchzuführen.

Zu erwähnen ist bei der Lösung nach Fig. 2 noch, dass hier vor der Einspritzung der Kunststoffschmelze 4 ein Einlegeteil 21 in der Kavität 12 platziert wurde, das durch den Spritzgießvorgang mit der Kunststoffschmelze 4 in situ verbunden wird.

Das Einlegeteil 21 wird in das geöffnete Werkzeug eingebracht bzw. eingelegt. Es kann entweder dekorativen Zwecken dienen oder bestimmte Eigenschaften wie Oberflächenhärte, Steifigkeit oder andere Eigenschaften in einem gewünschten Sinne beeinflussen. Natürlich können - im Unterschied zur skizzierten Lösung ― die Einlegeteile auch auf beiden bzw. mehreren Seiten der Kavität eingebracht werden.

Besonders sind als Einlegeteile GF- oder CF-Matten, Organobleche, Metallbleche oder andere Einlegeteile vorgesehen, die eine höhere Steifigkeit und Festigkeit des Formteils herstellen, als es die geschäumten Formteile selber hätten.

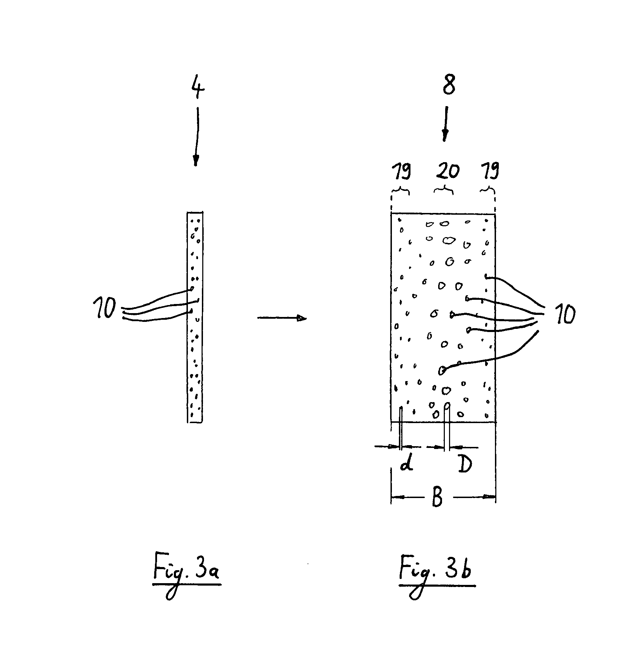

Der Vergleich der Fig. 3a ― wo die in die Kavität 12 mit ihrem Anfangsvolumen V_{A} eingespritzte Kunststoffschmelze 4 zu sehen ist - mit der Fig. 3b - wo das Kunststoff-Formteil 8 zu sehen ist, nachdem die Kavität 12 auf das Endvolumen V_{E} aufgefahren wurde - zeigt, wie sich zunächst in der Kunststoffschmelze 4 befindliche kleine Gasblasen 10 vergrößert haben, aufgrund des beschriebenen Prozesses bei warmer Wandung 9 der Kavität 12 und "atmendem Kern" allerdings in einer solchen Weise, dass die Gasblasen 10 ihr Volumen im wesentlichen nur im inneren Bereich des Formteils vergrößert haben.

Konkret bedeutet das, dass in einem Randbereich 19 des Formteils 8 (der sich über maximal 10 % der Dicken- oder Breitenerstreckung B des Formteils 8 erstreckt) der durchschnittliche Durchmesser d der Gasblasen 10 nur höchstens 50 % des Durchmessers D der Gasblasen 10 in einem zentralen Mittenbereich 20 beträgt.

Es liegt ein feinzelliger Schaum vor. Des weiteren ist eine Integralstruktur mit kleinen Zellen in Wanddickennähe und größeren Zellen in der Wanddickenmitte gegeben, was auch hinsichtlich des Festigkeitsverhaltens vorteilhaft sein kann.

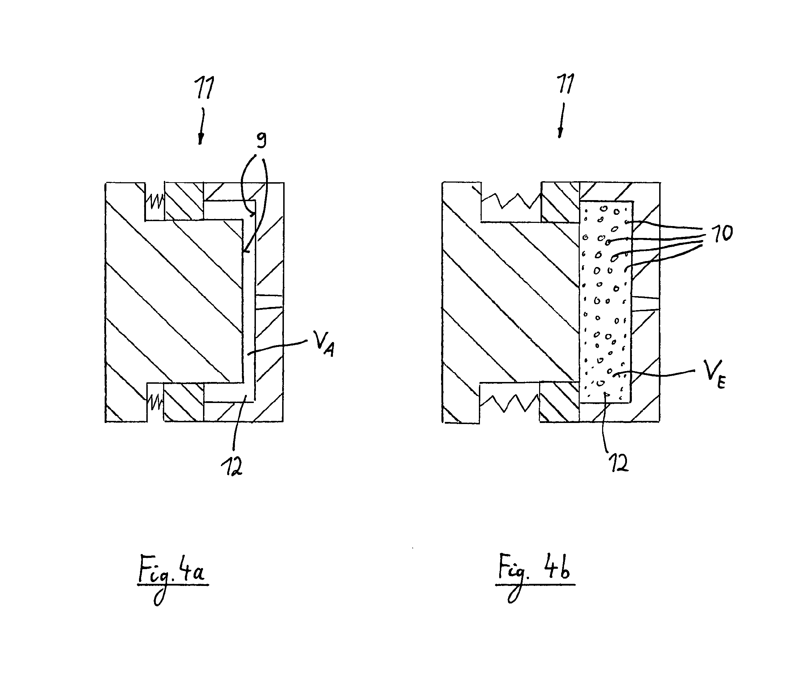

In den Figuren 4a und 4b ist eine Ausführungsform zu sehen, bei der nicht die gesamte Formnestfläche (d. h. Wandung 9), sondern nur ein Bereich hiervon "atmet", d. h. die Vergrößerung des Kavitätsvolumens bewerkstelligt.

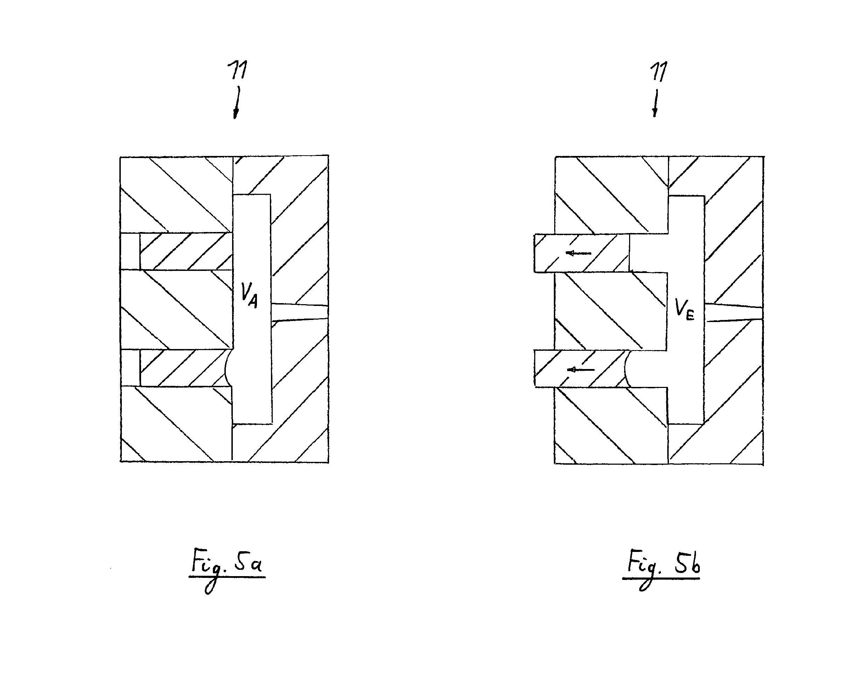

Bei der Lösung gemäß Fig. 5a und 5b ist zu sehen, dass - gemäß einer weiteren Ausführungsform der Erfindung - zwei verschiebbare Werkzeugkerne unterschiedlicher Geometrie vorgesehen sind. Hiermit werden weitere Möglichkeiten eröffnet, um die Formteilgeometrie zu beeinflussen. Dabei kann natürlich auch die Grundwanddicke zusätzlich verändert werden.

Die oben genannte Warmtemperatur, auf die die Kavitätswände des Werkzeugs vor dem Einspritzen der Schmelze erwärmt werden, hängt nach einer bevorzugten Verfahrensweise von der empfohlenen Werkzeugtemperatur ab und wird um eine definierte Temperaturdifferenz, beispielsweise um 50 K, höher angesetzt. Bei der Verarbeitung von ABS liegt die empfohlene Werkzeugtemperatur beispielsweise bei 50 °C bis 80 °C, so dass in diesem Falle eine Warmtemperatur von ca. 100 °C bis 130 °C angestrebt wird.

### Bezugszeichenliste:

- 1: Vorrichtung zum Spritzgießen
- 2: Schneckenzylinder
- 3: Plastifizier- und Einspritzschnecke
- 4: Kunststoffschmelze
- 5: Mittel zum Einspritzen eines Gases
- 6: Fluid (Gas)
- 7: Schneckengang
- 8: Kunststoff-Formteil
- 9: Wandung
- 10: Gasblase
- 11: Spritzgießwerkzeug
- 12: Kavität
- 13: Vorratsbehälter
- 14: Verdichter
- 15: Drucksensor für Schmelze
- 16: Drucksensor für Gas
- 17: Differenzbilder
- 18: Steuerung / Regelung
- 19: Randbereich
- 20: Mittenbereich
- 21: Einlegeteil
- G: Einspritzposition für Gas
- V_{A}: Anfangsvolumen
- V_{E}: Endvolumen
- Tw: Warmtemperatur
- T_{K}: Kalttemperatur
- d: Durchmesser der Gasblase
- D: Durchmesser der Gasblase
- B: Dicken- oder Breitenabmessung

- p_{F}: Gasdruck
- p_{S}: Schmelzedruck
- Delta p: Druckdifferenz: p_{F} - p_{S}

## Patentansprüche

1. Verfahren zum Spritzgießen von Kunststoff-Formteilen (8) aus thermoplastischem Kunststoff, das die Schritte aufweist:
a) Herstellen von thermoplastischer Kunststoffschmelze (4) durch Rotation einer Plastifizierschnecke (3) in einem Schneckenzylinder (2);
b) Versetzen der sich in der Plastifizierschnecke (3) befindlichen thermoplastischen Kunststoffschmelze (4) mit einem Fluid (6) durch Eingabe des Fluids (6) und/oder einer das Fluid enthaltenden chemischen Komponente in den Schneckenzylinder (2);
c) Durchmischen der mit Fluid (6) versetzten thermoplastischen Kunststoffschmelze (4) durch Ausführung einer Rotationsbewegung der Plastifizierschnecke (3);
d) Bereitstellen eines Spritzgießwerkzeugs (11) mit einer Kavität (12), wobei die Kavität (12) Wandungen (9) aufweist, wobei das Volumen der Kavität (12) des Spritzgießwerkzeugs (11) durch relatives Verschieben von Werkzeugteilen von einem Anfangsvolumen (V_{A}) auf ein Endvolumen (V_{E}) vergrößerbar ist;
e) Erwärmen zumindest eines Teils der Wandungen (9) der Kavität (12) auf eine Warmtemperatur (T_{w});
f) Einspritzen des Gemisches aus thermoplastischer Kunststoffschmelze (4) und Gas (6) in die Kavität (12) des Spritzgießwerkzeugs (11), wobei das Volumen der Kavität (12) das Anfangsvolumen (V_{A}) einnimmt;
g) Vergrößern des Volumens der Kavität (12) durch relatives Verschieben von Werkzeugteilen;
h) Abkühlen zumindest eines Teils der Wandungen (9) der Kavität auf eine Kalttemperatur (T_{K});
i) Entformen des spritzgegossenen Kunststoff-Formteils (8), nachdem
die Kunststoffschmelze (4) zumindest teilweise verfestigt ist,
wobei die Warmtemperatur (T_{w}) im Bereich oder oberhalb der Erweichungstemperatur oder der Glastemperatur des verarbeiteten Kunststoffmaterials oder mindestens um eine vorgegebene Temperaturdifferenz oberhalb der für die Verarbeitung des verarbeiteten Kunststoffmaterials empfohlenen Werkzeugtemperatur liegt.

2. Verfahren nach Anspruch 1, **dadurch gekennzeichnet, dass** das Herstellen von thermoplastischer Kunststoffschmelze (4) gemäß Schritt a) von Anspruch 1 in einer kombinierten Plastifizier- und Einspritzeinheit (2, 3) erfolgt.

3. Verfahren nach Anspruch 1 oder 2, **dadurch gekennzeichnet, dass** das Versetzen der Kunststoffschmelze (4) gemäß Schritt b) von Anspruch 1 durch Mittel (5) zum Einspritzen des Fluids (6) an einer axialen Einspritzposition (G) des Schneckenzylinders (2) erfolgt, an der sich zumindest zeitweise Schneckengänge (7) der Plastifizierschnecke (3) befinden.

4. Verfahren nach einem der Ansprüche 1 bis 3, **dadurch gekennzeichnet, dass** die Warmtemperatur (T_{W}) um 40 K bis 60 K oberhalb der für die Verarbeitung des verarbeiteten Kunststoffmaterials empfohlenen Werkzeugtemperatur liegt.

5. Verfahren nach einem der Ansprüche 1 bis 4, **dadurch gekennzeichnet, dass** das Endvolumen (V_{E}) der Kavität (12) mindestens 150 %, vorzugsweise mindestens 300 %, des Anfangsvolumens (V_{A}) der Kavität (12) beträgt.

6. Verfahren nach einem der Ansprüche 1 bis 5, **dadurch gekennzeichnet, dass** das fertige Kunststoff-Formteil (8) eine Dichte aufweist, die geringer ist als 0,7 g/cm³, vorzugsweise geringer ist als 0,5 g/cm³.

7. Verfahren nach einem der Ansprüche 1 bis 6, **dadurch gekennzeichnet, dass** das fertige Kunststoff-Formteil (8) in seinem Inneren Gasblasen (10) mit einem Durchmesser (d, D) aufweist, wobei der Durchmesser (d) der Gasblasen (10) in einem Randbereich (19) des Kunststoff-Formteils (8), der sich von der Außenoberfläche des Kunststoff-Formteils (8) bis zu 10 % einer Dicken- oder Breitenabmessung (B) ins Innere des Kunststoff-Formteils (8) erstreckt, höchstens 50 % des Durchmesser (D) der Gasblasen (10) in einem Mittenbereich (20) des Kunststoff-Formteils (8) beträgt.

8. Verfahren nach einem der Ansprüche 1 bis 7, **dadurch gekennzeichnet, dass** während der Durchführung des Schritts g) von Anspruch 1 ein Fluid, insbesondere ein Gas, in die Kunststoffschmelze injiziert wird.

9. Verfahren nach einem der Ansprüche 1 bis 8, **dadurch gekennzeichnet, dass** nach der Durchführung des Schritts g) von Anspruch 1 und Erreichen eines maximalen Volumens der Kavität (12) das Volumen der Kavität wieder reduziert wird, wobei das maximale Volumen der Kavität (12) vorzugsweise größer ist als das Endvolumen (V_{E}) der Kavität (12).

10. Verfahren nach einem der Ansprüche 1 bis 9, **dadurch gekennzeichnet, dass** vor der Durchführung des Schritts f) von Anspruch 1 mindestens ein Einlegeteil (21), insbesondere eine Folie, ein Gewirk, ein Gewebe, ein Organoblech und/oder ein Metallblech, in die Kavität (12) des Spritzgießwerkzeugs (11) eingebracht wird.
